# EUROPEAN PATENT APPLICATION

(11) **EP 2 554 414 A1**
(43) Date of publication of application: **06.02.2013**
(21) Application number: 11762394.2
(22) Date of filing: 18.02.2011
(51) Int. Cl.: B60J 3/00, E06B 9/42

(54) **WINDOW SHADE DEVICE**

(30) Priority: 30.03.2010 JP 2010076990
(71) Applicant: Ashimori Industry Co., Ltd., Osaka-shi, Osaka 550-0014 (JP)
(72) Inventor: HATA Koichiro, Settsu-shi Osaka 566-0001 (JP)
(74) Representative: Wilhelms · Kilian & Partner Patentanwälte
(86) International application number: PCT/JP2011/053455
(87) International publication number: WO 2011/122153

(57) **Abstract**

Included are: a shade; a pair of rails disposed so as to have a gradually increasing spacing therebetween from a proximal end to a distal end thereof; a housing device disposed on the proximal end side, to which the shade is mounted so as to be drawn therefrom and housed therein; a drawing member that includes a plurality of shade support parts supporting a drawing-side edge of the shade at a plurality of positions in a width direction and is configured to become larger and smaller such that intervals of the plurality of shade support parts become larger and smaller in the width direction; and a pair of runners connected to the drawing member and configured to move along the pair of rails. The drawing member deforms to become larger and smaller as the pair of runners are guided by the pair of rails to move.

## Description

### Technical Field

The present invention relates to the technology of shielding a window with a shade.

### Background Art

Patent Document 1 discloses a shade device applied to a window having a short side and a long side opposed to each other. The window shade according to Patent Document 1 includes a shade sheet having a first edge fixed to a winding shaft, a pair of guiding elements each including a guide groove, and an extraction rod connected to a second edge of the shade sheet. The extraction rod includes a center piece that is accommodated in a tubular loop formed at the second edge of the shade sheet and two end pieces each having a guide piece guided in the guide groove of the guiding element, whose length can be changed in accordance with the spacing between the pair of guiding elements. In this case, the winding shaft is disposed on the long-length side of a window where the spacing between the pair of guiding elements is large.

### Prior Art Document

### Patent Document

Patent Document 1: Japanese Patent Application Laid-Open No. 2005-313891

### Summary of the Invention

### Problem to be Solved by the Invention

According to Patent Document 1, unfortunately, in a case where a housing device (winding shaft) is disposed on the short-length side of a window where the spacing between rails (guiding elements) is small, the window in the entire width direction cannot be shielded in the state in which the shade is drawn. That is, the width dimensions of the drawing-side edge of the shade and the center piece itself to which the drawing-side edge is mounted do not change, and thus, in the state in which the shade is drawn, the portions of the window on both sides in the width direction of the shade are not shielded on the long-length side of the window.

Therefore, an object of the present invention is to shield a window having a long side and a short side opposed to each other as entirely as possible also in a case where a housing device is disposed on the short-length side and a shade is drawn from the short-length side toward the long-length side.

### Means to Solve the Problem

A first aspect relates to a shade device that shields a window, including: a shade configured to shield the window; a pair of rails disposed so as to have a gradually increasing spacing therebetween from proximal ends to distal ends thereof; a housing device disposed on the proximal end side of the pair of rails, to which the shade is mounted so as to be drawn therefrom and housed therein; a drawing member that includes a plurality of shade support parts supporting a drawing-side edge of the shade at a plurality of positions in a width direction of the shade and is scalable such that intervals of the plurality of shade support parts become larger and smaller in the width direction of the shade; and a pair of runners connected to both ends of the drawing member and respectively configured to move along the pair of rails, wherein upon the pair of runners being guided by the pair of rails to move, the drawing member deforms to become larger and smaller such that the intervals of the plurality of shade support parts become larger and smaller in accordance with the spacing between the pair of rails.

According to a second aspect, in the shade device of the first aspect, the plurality of shade support parts are positioned at equal intervals in the width direction of the shade in the drawing member, and the drawing member deforms to become larger and smaller such that the intervals of the plurality of shade support parts become larger and smaller at an equal rate.

According to a third aspect, in the shade device of the first or second aspect, the drawing member is a pantograph link mechanism.

According to a fourth aspect, in the shade device of the third aspect, the drawing member is configured by connecting a plurality of link members formed into a rod shape to form a plurality of parallelograms arranged in the width direction of the shade with opposite angles thereof facing each other, and the plurality of shade support parts support the shade at positions of a plurality of drawing-side connecting parts positioned on a drawing side of the shade among connecting parts connecting the link members to each other.

According to a fifth aspect, the shade device of the third or fourth aspect further includes an elastic member exerting a biasing force so as to deform the drawing member to become larger in a drawing/housing direction in a state in which the shade is drawn.

According to a sixth aspect, in the shade device of any one of the first to fifth aspects, the plurality of shade support parts support the drawing-side edge of the shade at positions of connecting parts between the drawing member and the pair of runners.

According to a seventh aspect, in the shade device of any one of the first to sixth aspects, the plurality of shade support parts are in line with each other along the width direction of the shade.

According to an eighth aspect, the shade device of any one of the first to seventh aspects further includes a drive mechanism causing the pair of runners to respectively move between the proximal ends and the distal ends of the pair of rails.

### Effects of the Invention

According to the shade device of the first aspect, the drawing member is moved in the drawing/housing direction of the shade, to thereby deform to become larger and smaller such that the intervals of the plurality of shade support parts become larger and smaller in the width direction of the shade, in accordance with the spacing between the pair of rails. As a result, the portions of the drawing-side edge of the shade each positioned between ones of the shade support parts become larger and smaller in accordance with the spacing between the pair of rails, so that the entire drawing-side edge becomes larger and smaller evenly in the width direction. This enables to entirely shield a window having a long side and a short side opposed to each other also in a case where a housing device is disposed on the short-length side and a shade is drawn from the short-length side toward the long-length side.

According to the shade device of the second aspect, the plurality of shade support parts are provided at the positions with equal intervals in the width direction of the shade, and the intervals of the plurality of shade support parts become larger and smaller at an equal rate, which enables the drawing-side edge of the shade to become larger and smaller in the width direction more evenly.

According to the shade device of the third aspect, the drawing member is a pantograph link mechanism, and thus, the intervals of the respective parts become larger and smaller at an equal rate more stably in the width direction of the shade. This enables the shade mounted to the drawing member to become larger and smaller evenly in the width direction.

According to the shade device of the fourth aspect, the drawing member is configured such that the plurality of shade support parts support the shade at the positions of the plurality of drawing-side connecting parts. This enables to draw the shade toward the drawing side further in the state in which the pair of runners are located at the distal ends of the pair of rails. Accordingly, a window to be shielded can be shielded entirely with more reliability.

According to the shade device of the fifth aspect, the drawing member is biased by the elastic member so as to deform to become larger and smaller in the drawing/housing direction, whereby the force required for housing the shade from the drawn state and the load imposed on the shade device by the above-mentioned force can be reduced. This enables to start housing the shade smoothly.

According to the shade device of the sixth aspect, the shade support parts support the drawing-side edge of the shade also at the positions of the connecting parts between the drawing member and the pair of rails. This enables the shade support parts to act on the drawing-side edge of the shade in a broader range in the width direction of the shade, whereby the entire drawing-side edge of the shade can become larger and smaller evenly over an entire portion between the pair of rails.

According to the shade device of the seventh aspect, the plurality of shade support parts are in line with each other along the width direction of the shade. This enables the intervals of the plurality of shade support parts to become larger and smaller evenly in the width direction of the shade, whereby the drawing-side edge of the shade deforms to become larger and smaller more evenly.

According to the shade device of the eighth aspect, the drive mechanism is included, which enables to automatically perform the operation of drawing and housing a shade with ease.

### Brief Description of Drawings

FIG. 1 is a view showing a shade device in a state in which a shade is housed.
FIG. 2 is a view showing the shade device in a state in which the shade is drawn.
FIG. 3 is a plan view showing a drawing member.
FIG. 4 is a view on arrow A of FIG. 2.
FIG. 5 is a view showing an operation of drawing or housing the shade.

### Embodiment for Carrying Out the Invention

Hereinafter, a shade device according to an embodiment is described.

### <Configuration of shade device>

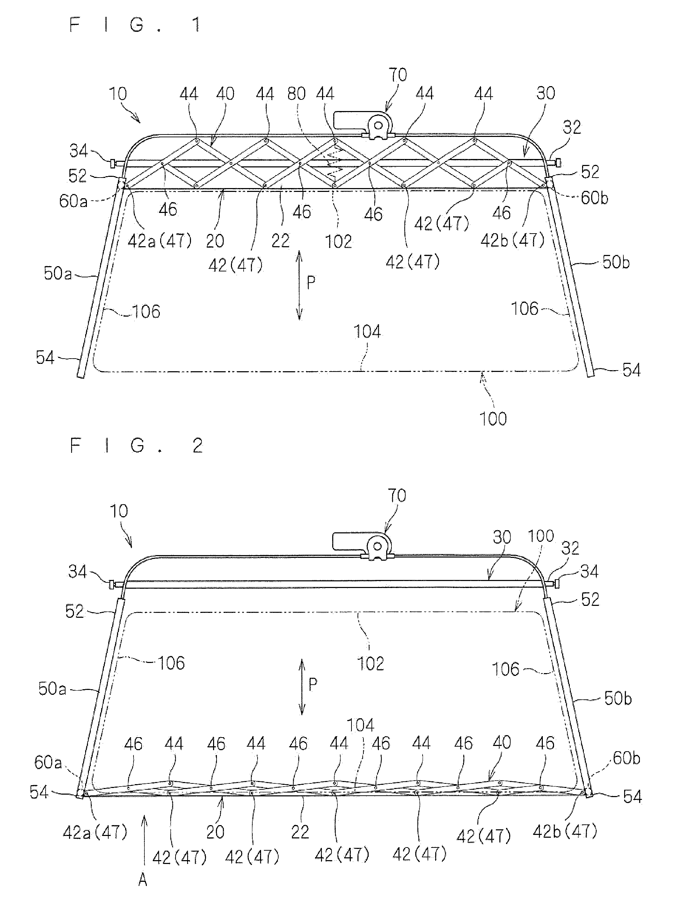

The configuration of a shade device 10 is described with reference to FIGS. 1 to 4. The shade device 10 is a device for shielding a window 100 with a shade 20.

The shade device 10 is configured such that the shade 20 is guided by a pair of rails 50a and 50b via a drawing member 40 and a pair of runners 60a and 60b and is drawn from and housed in a housing device 30, to thereby shield the window 100. More specifically, the shade device 10 is configured such that the pair of rails 50a and 50b are disposed to have a larger spacing at proximal ends 52 than distal ends 54, and the shade 20 is drawn from the proximal ends 52 toward the distal ends 54. That is, the shade device 10 is applied to the window 100 having a short side 102 and a long side 104 opposed to each other. The shade device 10 is more suitable for, for example, a case under the constraint that the housing device 30 of the shade 20 needs to be disposed on the short side 102 side of the window 100 in terms of space.

Description is now given of an example in which the window 100 to which the shade device 10 is applied is a rear window of a vehicle, which is formed into an isosceles trapezoid. Needless to say, the shade device 10 is applicable not only to a rear window of a vehicle, but also to a side (side door) window of a vehicle and windows other than ones of vehicles. Besides, the shade device 10 is applicable to windows having shapes other than an isosceles trapezoidal shape. Note that description is given assuming that the direction in which the short side 102 and the long side 104 of the window 100 extend (horizontal direction of FIGS. 1 and 2) is a width direction.

The shade device 10 includes the shade 20, the housing device 30, the drawing member 40, the pair of rails 50a and 50b, the pair of runners 60a and 60b, a drive mechanism 70, and an elastic member 80.

The shade 20 is a sheet-like member that can shield the window 100 of interest. In this case, the shade 20 is formed so as to be scalable in at least one direction (width direction in this case). The shade 20 is formed by, for example, cutting and sewing a mesh-like fabric material, resin sheet, or the like into the shape and size suitable for shielding the window 100 in an extended state. The mode of the shade 20 scalable in the width direction is obtained by adopting a scalable form by, for example, providing a shape and a sag for allowing a scale change with a material that makes the shade 20 stretchable, pleating, or the like. FIGS. 1, 2, and 5 illustrate the example in which the shade 20 is formed of a stretchable material. It suffices that the shade 20 is formed of a material that can be extended with a relatively small tensile force and has stretchability such that when one edge of the shade 20 is pulled in the width direction, a periphery thereof is also extended. That is, the shade 20 preferably has a shape so as to become gradually wider (approximately trapezoidal shape) from the other edge thereof to the one edge thereof approximately along a side 106 of the window 100 in the state in which the one edge and the other edge thereof are disposed on the long side 104 side and the short side 102 side of the window 100, respectively, and the one edge deforms to become larger in accordance with the length of the long side 104 (see FIG. 2).

The shade 20 is mounted to the housing device 30 so as to be drawn therefrom and housed therein. The housing device 30 includes a wind-up shaft 32 and a support part 34 that supports the wind-up shaft 32 so as to rotate relative thereto about an axis. The wind-up shaft 32 is rotativley biased against the support part 34 by, for example, a coil spring (not shown). The shade 20 has one edge fixed to the wind-up shaft 32, and in the state in which a drawing force is not applied thereto, is maintained in the housed state of being wound up by the wind-up shaft 32 by the rotational biasing force of the coil spring (see FIG. 1). Then, when a drawing-side edge 22 of the shade 20 housed in the housing device 30, which is opposed to the one edge of the shade 20, is pulled, the shade 20 is drawn from the housing device 30 (see FIG. 2).

The housing device 30 is disposed on the short side 102 side of the window 100 (proximal end 52 side of the pair of rails 50a and 50b described below, see FIGS. 1 and 2). More specifically, the housing device 30 is disposed inside an interior material on the short side 102 side (in this case, a ceiling side of a vehicle) of an interior material surrounding the window 100, which is hidden from the outside. It suffices that the support part 34 of the housing device 30 is formed so as to be mounted at a position at which the housing device 30 is disposed by screwing or the like. The shade 20 can be drawn from the housing device 30 through an opening formed in the interior material on the short side 102 side.

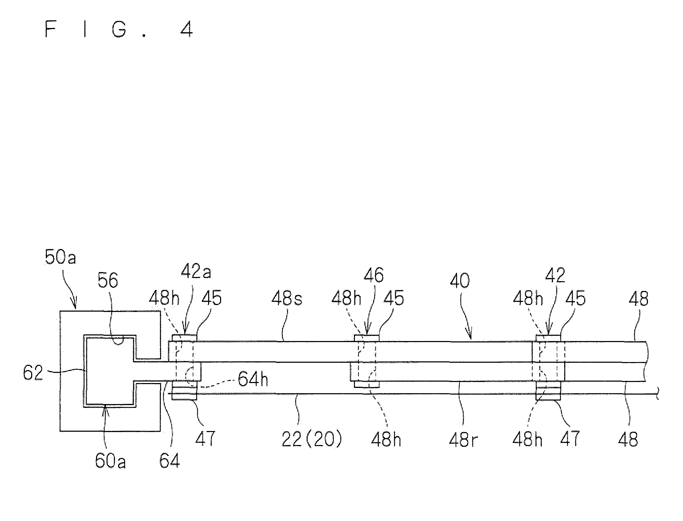

The pair of rails 50a and 50b are each formed into a long rod shape and include a guide groove part 56 along the longitudinal direction thereof. The pair of rails 50a and 50b are formed in a linear shape or curved shape (in this case, a linear shape) so as to extend along the sides 106 of the window 100 of interest. The guide groove parts 56 are formed so as to guide the pair of runners 60a and 60b described below between the proximal ends 52 and the distal ends 54 of the pair of rails 50a and 50b along the longitudinal direction thereof. More specifically, the guide groove parts 56 each has an inner space for housing one end 62 of each of the pair of runners 60a and 60b and are open so as to allow the other end 64 thereof to extend outwardly (see FIG. 4). In this case, the guide groove part 56 has a cross-sectional shape larger (in this case, slightly larger) than that of the one end 62 of each of the pair of runners 60a and 60b and is open to become narrow so as to prevent the one end 62 from slipping off.

The pair of rails 50a and 50b are disposed so as to have a gradually increasing spacing therebetween from the proximal ends 52 toward the distal ends 54 (see FIGS. 1 and 2). Put it another way in the state in which the pair of rails 50a and 50b are applied to the window 100 of interest, they are respectively disposed so as to have a gradually increasing spacing from the short side 102 side toward the long side 104 side along the sides 106 of the window 100. In this case, the pair of rails 50a and 50b are disposed so as to be inclined at approximately the same angle of inclination toward the outside in the width direction with respect to the direction orthogonal to the short side 102 and the long side 104 (drawing/housing direction P of the shade 20), correspondingly to the shape of the window 100. Needless to say, the pair of rails 50a and 50b may be disposed at angles of inclination different from each other with respect to the drawing/housing direction P of the shade 20.

The pair of rails 50a and 50b are disposed in a position approximately parallel to the plane formed by the width direction of the window 100 and the drawing/housing direction P. In this case, the pair of rails 50a and 50b are disposed inside the interior materials of the side 106 portions of the window 100, which is hidden so as not to overlap the window 100.

The pair of runners 60a and 60b are allowed to move along the longitudinal direction of the guide groove parts 56 of the pair of rails 50a and 50b in the state in which the one ends 62 are housed in the guide groove parts 56 of the pair of rails 50a and 50b and the other ends 64 extend from the openings (see FIG. 4). Formed at the other ends 64 of the pair of runners 60a and 60b are hole parts 64h that pass therethrough in the direction approximately orthogonal to the plane formed by the width direction and the drawing/housing direction P, for connection to the drawing member 40.

The drawing member 40 is a member mounted to the drawing-side edge 22 of the shade 20 and has both ends connected to the pair of runners 60a and 60b (see FIGS. 1 to 4). The drawing member 40 is configured to move in the drawing/housing direction P of the shade 20 as the pair of runners 60a and 60b move along the pair of rails 50a and 50b so as to draw and house the shade 20.

When the pair of runners 60a and 60b move along the pair of rails 50a and 50b, the spacing between the pair of runners 60a and 60b becomes larger or smaller in accordance with the spacing between the pair of rails 50a and 50b. For this reason, the drawing member 40 is configured to be scalable in the width direction. More specifically, the drawing member 40 includes a plurality of shade support parts 47 that support the drawing-side edge 22 of the shade 20 at a plurality of positions in the width direction, and is configured to be scalable such that the intervals of the plurality of shade support parts 47 become larger and smaller. In this case, the plurality of shade support parts 47 are provided at positions with equal intervals in the width direction of the shade 20 in the drawing member 40, and the drawing member 40 is configured so as to be scalable such that the intervals of the plurality of shade support parts 47 become larger and smaller at an equal rate.

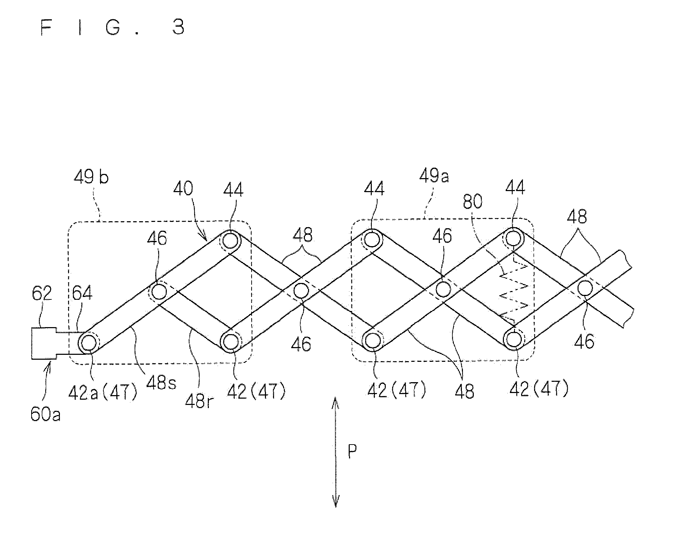

The drawing member 40 is a pantograph link mechanism configured to be scalable in the width direction. To describe a specific configuration, the drawing member 40 is configured by connecting a plurality of link members 48 formed into a flat rod shape to form a plurality of parallelograms (in this case, diamond shapes) that are arranged in the width direction of the shade 20 with opposite angles thereof facing each other. The plurality of link members 48 constitute a plurality of intermediate members 49a connected in a line and end members 49b respectively connected to both ends of the plurality of intermediate members 49a (see FIG. 3). Among the plurality of link members 48, the pair of link members 48 constituting the end members 49b are referred to as one link member 48s and the other link member 48r.

The intermediate member 49a is an X-shaped member in which the pair of link members 48 having the same length dimension are connected so as to rotate relative to each other about one axis in the intermediate portion thereof in the state in which they are caused to intersect each other and overlap each other in the thickness direction. The plurality of link members 48 that constitute the plurality of intermediate members 49a are all formed to have the same length dimension. The end member 49b is configured by connecting the end of the other link member 48r having a half length dimension of the one link member 48s to the intermediate portion of the one link member 48s having the same length dimension as that of the link member 48 constituting the intermediate member 49a.

In this case, four intermediate members 49a are arranged in a parallel manner in the width direction to be connected, and the end members 49b are connected to both ends in the width direction thereof. The intermediate members 49a are connected to each other so as to rotate about one axis relative thereto with the ends of the respective link members 48 overlapped each other in the thickness direction. The intermediate member 49a and the end member 49b are connected to each other such that the ends of the one link member 48s and the other link member 48r and the ends of the link members 48 corresponding thereto rotate about one axis relative thereto.

It suffices that the respective portions of the link members 48, 48s, and 48r are connected as, for example, described below. That is, the link members 48, 48s, and 48r in which the hole parts 48h passing therethrough in the thickness direction at the connecting positions are caused to overlap each other such that the hole parts 48h approximately coincide with each other, to thereby connect the link members 48, 48s, and 48r in the state in which approximately cylindrically-shaped connecting axis members 45 having a small diameter portion that can be inserted into the hole parts 48h are inserted therethrough (see FIG. 4). This allows the drawing member 40 to be scalable in the width direction and the drawing/housing direction P on the plane orthogonal to the axial direction of the connecting axis member 45.

As a whole, the drawing member 40 has a shape in which a plurality of parallelograms having the same shape as well as the same size are arranged in the width direction between ones of the intermediate members 49a and the end members 49b. Each of the parallelogram portions deforms into the same shape through a change of the opposite angle while keeping a side of a constant length so as to deform to become larger and smaller mainly in the width direction and also deform to become larger and smaller in the drawing/housing direction P.

The one link members 48s of the end members 49b are connected to the pair of runners 60a and 60b so as to rotate about one axis relative thereto, at the end on the outermost side of the end members 49b in the width direction (see FIG. 3). As in the more in which the link members 48 are connected to each other, the one link members 48s and the pair of runners 60a and 60b are connected using the connecting axis members 45 by overlapping the hole part 48h and the hole part 64h so as to approximately coincide with each other. In this case, the one link members 48s are connected to the pair of runners 60a and 60b in a state of pointing the drawing side in the drawing/housing direction P toward the outermost side in the width direction.

Among the connecting parts between ones of the plurality of link members 48, the connecting parts located on the drawing side of the shade 20, the connecting parts located on the housing side thereof, and the connecting parts located in the intermediate portion thereof are referred to as drawing-side connecting parts 42, housing-side connecting parts 44, and intermediate connecting parts 46, respectively (see FIGS. 1 and 2). The connecting parts between the both ends (the one link members 48s of the end members 49b) of the drawing member 40 and the pair of runners 60a and 60b are referred to as drawing-side connecting parts 42a and 42b, respectively.

The drawing member 40 is configured such that the plurality of drawing-side connecting parts 42 and the drawing-side connecting parts 42a and 42b are in line with each other. Even if the drawing member 40 deforms to become larger and smaller, the plurality of drawing-side connecting parts 42 and the drawing-side connecting parts 42a and 42b are in line with each other. Similarly, the plurality of housing-side connecting parts 44 and the plurality of intermediate connecting parts 46 are each in line with one another. The connecting parts 42, 44, and 46 are each disposed in line at equal intervals.

In this case, the drawing member 40 is supported such that the plurality of drawing-side connecting parts 42, the plurality of housing-side connecting parts 44, and the plurality of intermediate connecting parts 46 are each in line with one another along the width direction in the state in which the pair of runners 60a and 60b are located at the same position in the drawing/housing direction P (see FIGS. 1, 2, and 5). In addition, the drawing member 40 is made such that the plurality of drawing-side connecting parts 42 are opposed to the plurality of housing-side connecting parts 44 in the drawing/housing direction P.

That is, the drawing member 40 deforms to become larger and smaller in the width direction when the plurality of drawing-side connecting parts 42 move toward and away from each other, the plurality of housing-side connecting parts 44 move toward and away from each other, and the plurality of intermediate connecting parts 46 move toward and away from each other and, at the same time, deforms to become larger and smaller in the drawing/housing direction P when the plurality of drawing-side connecting parts 42 and the plurality of housing-side connecting parts 44 move toward and away from each other.

The drawing member 40 is configured such that the plurality of shade support parts 47 support the drawing-side edge 22 of the shade 20 at the positions of the plurality of drawing-side connecting parts 42 and the drawing-side connecting parts 42a and 42b. That is, the plurality of shade support parts 47 support the drawing-side edge 22 of the shade 20 at the positions with equal intervals on the line at which the drawing-side connecting parts 42 and the drawing-side connecting parts 42a and 42b are located along the width direction of the shade 20. In this case, the shade support parts 47 provided at the positions of the drawing-side connecting parts 42a and 42b support the both ends of the drawing-side edge 22 of the shade 20. The shade support parts 47 provided at the positions of the drawing-side connecting parts 42 between the drawing-side connecting parts 42a and 42b support the portion between the both ends of the drawing-side edge 22, at the positions with equal intervals. Accordingly, when the drawing member 40 deforms to become larger and smaller in the width direction, the portions of the drawing-side edge 22 located between the plurality of drawing-side connecting parts 42 and the drawing-side connecting parts 42a and 42b expand and contract in a uniform manner, and the drawing-side edge 22 becomes larger and smaller entirely in the width direction in a uniform manner.

The plurality of shade support parts 47 support the drawing-side edge 22 of the shade 20 on one side (lower side of FIG. 4) in axial directions of the plurality of drawing-side connecting part 42 and the connecting axis members 45 for the drawing-side connecting parts 42 and the drawing-side connecting parts 42a and 42b. That is, the shade support parts 47 are formed such that the drawing-side edge 22 of the shade 20 can be fixed to one ends of the connecting axis members 45. For example, the shade support parts 47 may adopt the configuration in which the drawing-side edge 22 of the shade 20 is screwed to the connecting axis members 45, or the configuration in which members that can be crimped onto the drawing-side edge 22 or pinch the drawing-side edge 22 are fixed to the connecting axis members 45. Needless to say, the shade support part 47 may be integrally formed with the connecting axis member 45.

It is preferable that the plurality of shade support parts 47 be made so as to support the drawing-side edge 22 of the shade 20 to be located on the drawing-side exceeding the plurality of drawing-side connecting parts 42 and the drawing-side connecting parts 42a and 42b. That is, it suffices that the window 100 is entirely shielded with reliability by allowing the drawing-side edge 22 of the shade 20 to be disposed further on the drawing side. It suffices that in order to suppress the shade 20 from being, for example, deformed or worn out, the plurality of shade support parts 47 are fixed to the drawing-side edge 22 of the shade 20 such that the housing-side connecting parts 44 and the connecting axis members 45 for the intermediate connecting parts 46 are in non-contact with the shade 20. That is, it suffices that the shade support parts 47 are configured so as to support the shade 20 at the positions apart from the connecting axis members 45 in the axial direction thereof (see FIG. 4).

Needless to say, the plurality of shade support parts 47 are not limited to ones that support the drawing-side edge 22 of the shade 20 at the positions of the plurality of drawing-side connecting parts 42 and the drawing-side connecting parts 42a and 42b. For example, the plurality of shade support parts 47 may support the drawing-side edge 22 by the parts including the plurality of housing-side connecting parts 44, the plurality of intermediate connecting parts 46, and the link connecting members 48.

The drawing member 40 causes house the shade 20 to be housed in the housing device 30 in the state in which the pair of runners 60a and 60b are located at the proximal ends 52 of the pair of rails 50a and 50b (see FIG. 1). In the state in which the shade 20 is housed, the drawing member 40 becomes smaller in the width direction and becomes larger in the drawing/housing direction P. The drawing member 40 causes the shade 20 to be drawn from the housing device 30 in the state in which the pair of runners 60a and 60b are located at the distal ends 54 of the pair of rails 50a and 50b (see FIG. 2). In this drawn state, the drawing member 40 becomes larger in the width direction and becomes smaller in the drawing/housing direction P.

Needless to say, the drawing member 40 is not limited to a pantograph link mechanism but is only required to deform to become larger and smaller so as to make larger and smaller (preferably, evenly) the respective intervals of the plurality of shade support parts 47 that support the drawing-side edge 22 of the shade 20 at a plurality of positions. For example, members such as a coil spring and rubber that can deform to become larger and smaller while making the respective parts larger and smaller are adoptable as the drawing member 40.

The drive mechanism 70 is configured to drive the pair of runners 60a and 60b to move between the proximal ends 52 and the distal ends 54 of the pair of rails 50a and 50b (see FIGS. 1 and 2). That is, the shade 20 can be moved in the drawing/housing direction P by moving the pair of runners 60a and 60b by the drive mechanism 70. The drive mechanism 70 is configured to move the pair of runners 60a and 60b to be located at the same position in the drawing/housing direction P. In this case, the pair of runners 60a and 60b are moved at an approximately equal speed. Needless to say, in a case where the pair of rails 50a and 50b are disposed at angles of inclination different from each other with respect to the drawing/housing direction P (in a case where they have lengths different from each other), the moving speeds of the pair of runners 60a and 60b may be respectively changed in accordance with the angles (lengths) of the rails 50a and 50b.

For example, the drive mechanism 70 may adopt the configuration in which the pair of runners 60a and 60b are mounted to portions of a wire and are moved along the pair of rails 50a and 50b by driving the wire to be, for example, wound up or fed by a motor.

It suffices that the drive mechanism 70 is connected to an operation part such as a switch (not shown) so as to allow the operation of drawing and housing the shade 20 by operating the operation part. In a case where the drive mechanism 70 is applied to the window 100 of a vehicle, a switch for operating the shade 20 may be provided inside the vehicle.

Needless to say, the drive mechanism 70 is not limited to the above-mentioned configuration. For example, the drive mechanism 70 may adopt the configuration in which a member that has flexibility, is not easily bent in a case of being pushed in the longitudinal direction, and includes a plurality of teeth formed continuously in the longitudinal direction is caused to advance and retract by a gear driven by a motor, to thereby move the pair of runners 60a and 60b. Alternatively, the configuration in which the shade 20 is driven to be drawn and housed may be omitted, and the configuration may be made such that the shade 20 is manually drawn and housed with a handle for drawing or the like that is provided to the drawing member 40.

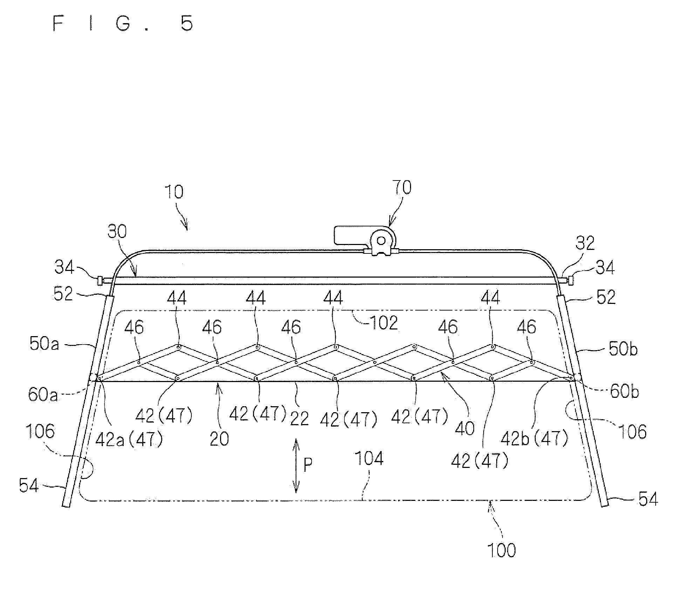

The shade device 10 includes the elastic member 80 for exerting a biasing force so as to deform the drawing member 40 to become larger in the drawing/housing direction P in the state in which the shade 20 is drawn. For example, the elastic member 80 may adopt the mode of biasing the pair of drawing-side connecting part 42 and housing-side connecting part 44 opposed to each other in a direction in which they become apart from each other or the mode of biasing the adjacent drawing-side connecting parts 42, the adjacent housing-side connecting parts 44, or the adjacent intermediate connecting parts 46 in a direction in which they become close to each other. A coil spring, a rubber material (in a case where parts are biased in the direction in which they become close to each other), or the like is adoptable as the above-mentioned elastic member 80. Alternatively, the elastic member 80 is obtained by disposing a plate spring, a torsion coil spring, or the like having a V-shape in the contracting state or expanding state to the inside or outside of an angle formed by the link members 48 connected with the connecting parts 42, 44, and 46 so as to make the angle larger or smaller. Note that FIGS. 1 and 3 show, by a chain double-dashed line, the example in which the elastic member 80 being a coil spring is disposed between the drawing-side connecting part 42 and the housing-side connecting part 44 that are opposed to each other in a state of having a natural length. That is, in this case, the elastic member 80 has a natural length in the housed state of the shade 20 and is compressed in the drawn state thereof. Note that the elastic member 80 is not shown in FIGS. 2 and 5.

### <Action of shade device>

The action of the shade device 10 is described with reference to FIGS. 1, 2, and 5.

First, the action of the shade device 10 when the shade 20 is drawn is described. The initial state of the shade device 10 is such that the shade 20 is housed as shown in FIG. 1. That is, the pair of runners 60a and 60b are located at the proximal ends 52 of the pair of rails 50a and 50b, and the shade 20 is housed in the housing device 30. In this state, the shade 20 is in the state in which the drawing-side edge 22 is located on the housing device 30 side with respect to the short side 102 of the window 100 and does not shield the window 100. The drawing member 40 is smaller in the width direction and larger in the drawing/housing direction P, which is hidden in the interior material on the short side 102 side of the window 100. The elastic member 80 is kept in the state of having a natural length.

A user causes the drive mechanism 70 to work so as to draw the shade 20 via an operation part or the like.

The drive mechanism 70 causes the pair of runners 60a and 60b to move from the proximal ends 52 of the pair of rails 50a and 50b toward the distal end 54 side thereof, whereby the drawing member 40 is moved toward the drawing side along the drawing/housing direction P. Then, the shade 20 is drawn along with the movement of the drawing member 40. In this case, the plurality of shade support parts 47 are in line with each other at the positions of the plurality of drawing-side connecting parts 42 and the drawing-side connecting parts 42a and 42b, and accordingly, the drawing-side edge 22 of the shade 20 is moved to approximately the same position of the pair of runners 60a and 60b in the drawing/housing direction P.

The drawing member 40 per se deforms to become gradually larger in the width direction and deforms to become gradually smaller in the drawing/housing direction P, as moving toward the drawing side in accordance with the spacing between the pair of rails 50a and 50b (see FIGS. 1 and 5 in this order). Accordingly, the intervals of the plurality of drawing-side connecting parts 42 and the drawing-side connecting parts 42a and 42b are increased, whereby the drawing-side edge 22 of the shade 20 deforms to become larger evenly in the width direction. In addition, as the drawing-side edge 22 deforms to become larger, the portion of the shade 20 on the housing side exceeding the drawing-side edge 22 also deforms into a shape of becoming gradually larger from the position of the housing device 30 toward the drawing-side.

The drawing-side edge 22 is stretched in the width direction and the shade 20 is extended even while the shade 20 is being drawn, whereby the portion of the window 100 on the housing side exceeding the drawing-side edge 22 is shielded. That is, the shade device 10 can partially shield the window 100 as well. It suffices that the drive mechanism 70 is configured to stop the shade 20 at some midpoint by operating an operation part or the like.

When the pair of runners 60a and 60b are moved to the distal ends 54 of the pair of rails 50a and 50b, the shade 20 is drawn (see FIG. 2). In this state, the drawing member 40 is larger in the width direction and is smaller in the drawing/housing direction P. The drawing-side edge 22 of the shade 20 is located on the drawing side exceeding the long side 104 of the window 100, and the window 100 is entirely shielded with the shade 20. More specifically, the shade 20 in which the drawing-side edge 22 is extended beyond the long side 104 in the width direction is extended into an approximately trapezoidal shape to have gradually decreasing width toward the housing device 30, and has a shape larger than the window 100 approximately along the window 100, to thereby shield the window 100.

Next, the action of the shade device 10 when the shade 20 is housed is described.

A user causes the drive mechanism 70 to work so as to house the shade 20 via an operation part or the like.

The drive mechanism 70 causes the pair of runners 60a and 60b to move from the distal ends 54 of the pair of rails 50a and 50b toward the proximal end 52 side thereof, so that the drawing member 40 is moved toward the housing side along the drawing/housing direction P. Then, the shade 20 is housed along with the movement of the drawing member 40.

The biasing force is exerted such that the drawing member 40 deforms to become larger in the drawing/housing direction P by the elastic member 80, and thus, the drawing member 40 starts moving toward the housing side smoothly. When the shade 20 is housed further, the housing device 30 (wind-up shaft 32 rotatively biased) pulls the shade 20 toward the housing side, and accordingly, the drawing member 40 starts moving toward the housing side more smoothly.

The drawing member 40 per se deforms to become gradually smaller in the width direction and deforms to become gradually larger in the drawing/housing direction P, as moving toward the housing side in accordance with the spacing between the pair of rails 50a and 50b (see FIGS. 2 and 5 in this order). Accordingly, the intervals of the plurality of drawing-side connecting parts 42 and the drawing-side connecting parts 42a and 42b are made smaller, whereby the drawing-side edge 22 of the shade 20 deforms to become smaller evenly in the width direction.

Then, the pair of runners 60a and 60b are moved to the proximal ends 52 of the pair of rails 50a and 50b, so that the shade 20 is housed (see FIG. 1).

While the description has been given of the example in which the shade device 10 is applied to the window 100 having a trapezoidal shape, the shade device 10 is also applicable to windows having other shapes. For example, examples of the windows to which the shade device 10 is applied include a window whose side portion connecting the short side 102 and the long side 104 opposed to each other is curved (for example, is formed to bulge in the width direction) or stepped. Needless to say, the shade device 10 is applicable to a window, though it is not the window 100 having the short side 102 and the long side 104 opposed to each other. That is, the shade device 10 is capable of shielding the window 100 irrespective of a shape as long as the pair of rails 50a and 50b can be disposed therein in the above-mentioned mode.

According to the shade device 10 with the configuration described above, when the pair of runners 60a and 60b are moved along the pair of rails 50a and 50b, the drawing member 40 is moved in the drawing/housing direction P. Then, the drawing member 40 deforms to become larger and smaller such that the intervals of the plurality of shade support parts 47 that support the drawing-side edge 22 of the shade 20 become larger and smaller in the width direction of the shade 20, which enables the shade 20 to become larger and smaller evenly in the width direction. That is, the shade 20 can be made larger in the width direction on the long side 104 side of the window 100 with respect to the short side 102 thereof. This enables to shield the entire window 100 having the short side 102 and long side 104 opposed to each other also in a case where the housing device 30 is disposed on the short side 102 side and the shade 20 is drawn from the short side 102 side toward the long side 104 side.

The plurality of shade support parts 47 are provided at the positions with equal intervals in the width direction of the shade 20, and the intervals of the plurality of shade support parts 47 become larger and smaller at an equal rate. Accordingly, the portions of the drawing-side edge 22 of the shade 20 that are positioned between ones of the plurality of shade support parts 47 can become larger and smaller at an equal rate, which enables the drawing-side edge 22 to become larger and smaller more evenly in the entire width direction.

The drawing member 40 is a pantograph link mechanism, which easily deforms to become larger and smaller. Through the deformation for becoming larger and smaller, the intervals between the respective portions become larger and smaller at an equal rate more stably in the width direction of the shade 20. This enables the shade 20 mounted to the drawing member 40 to become larger and smaller evenly in the width direction.

The plurality of shade support parts 47 are configured to support the shade 20 at the positions of the plurality of drawing-side connecting parts 42, and accordingly, the drawing member 40 is capable of drawing the shade 20 further toward the drawing side in the state in which the pair of runners 60a and 60b are located at the distal ends 54 of the pair of rails 50a and 50b. This enables to shield the entire window 100 to be shielded more reliably. The entire drawing member 40 is hidden in the shade from one side, which leads to an advantage of excellent design property. Further, in this case, the shade support parts 47 support the drawing-side edge 22 of the shade 20 also at the positions at which they are located on the drawing-side connecting parts 42a and 42b. This enables the shade support parts 47 to act on the drawing-side edge 22 of the shade 20 in a broader range in the width direction of the shade 20, to thereby make larger and smaller the entire drawing-side edge 22 of the shade 20 evenly over the portion between the pair of rails 50a and 50b.

The plurality of shade support parts 47 are in line with each other along the width direction of the shade 20. Accordingly, the intervals of the plurality of shade support parts 47 become larger and smaller more evenly in the width direction of the shade 20, which enables the drawing-side edge 22 of the shade 20 to become larger and smaller more reliably. In addition, the drawing-side edge 22 of the shade 20 can be supported linearly, which enables to shield the entire window 100 in the state in which the drawing-side edge 22 extends along the long side 104 of the window 100.

Further, the drive mechanism 70 is included, whereby it is possible to manually draw and house the shade 20 with ease.

In the operation of housing the shade 20, the drawing member 40 is biased by the elastic member 80 so as to deform to become larger in the drawing/housing direction P, which enables to reduce the force (drive force by the drive mechanism 70) required for housing the shade 20 from the housed state and the loads imposed on the drawing member 40, the pair of runners 60a and 60b, and the pair of rails 50a and 50b caused by the above-mentioned force. This enables to start housing the drawing member 40 smoothly.

While the shade device 10 has been described above in detail, the foregoing description is in all aspects illustrative, and the present invention is not limited thereto. That is, numerous modifications and variations can be devised in the described aspects without departing from the scope of the invention.

### Description of Reference Symbols

- 10: shade device
- 20: shade
- 22: drawing-side edge
- 30: housing device
- 40: drawing member
- 42, 42a, 42b: drawing-side connecting part
- 47: shade support part
- 48: link member
- 50a and 50b: a pair of rails
- 52: proximal end
- 54: distal end
- 60a and 60b: a pair of runners
- 70: drive mechanism
- 80: elastic member
- 100: window
- P: drawing/housing direction

## Claims

1. A shade device that shields a window, comprising:
a shade configured to shield said window;
a pair of rails disposed so as to have a gradually increasing spacing therebetween from proximal ends to distal ends thereof;
a housing device disposed on the proximal end side of said pair of rails, to which said shade is mounted so as to be drawn therefrom and housed therein;
a drawing member that includes a plurality of shade support parts supporting a drawing-side edge of said shade at a plurality of positions in a width direction of said shade and is scalable such that intervals of said plurality of shade support parts become larger and smaller in the width direction of said shade; and
a pair of runners connected to both ends of said drawing member and respectively configured to move along said pair of rails,
wherein upon said pair of runners being guided by said pair of rails to move, said drawing member deforms to become larger and smaller such that the intervals of said plurality of shade support parts become larger and smaller in accordance with the spacing of said pair of rails.

2. The shade device according to claim 1, wherein said plurality of shade support parts are positioned at equal intervals in the width direction of said shade in said drawing member, and said drawing member deforms to become larger and smaller such that the intervals of said plurality of shade support parts become larger and smaller at an equal rate.

3. The shade device according to claim 1, wherein said drawing member is a pantograph link mechanism.

4. The shade device according to claim 3, wherein:
said drawing member is configured by connecting a plurality of link members formed into a rod shape to form a plurality of parallelograms arranged in the width direction of said shade with opposite angles thereof facing each other; and
said plurality of shade support parts support said shade at positions of a plurality of drawing-side connecting parts positioned on a drawing side of said shade among connecting parts connecting said link members to each other.

5. The shade device according to claim 3, further comprising an elastic member exerting a biasing force so as to deform said drawing member to become larger in a drawing/housing direction in a state in which said shade is drawn.

6. The shade device according to claim 1, wherein said plurality of shade support parts support said drawing-side edge of said shade at positions of connecting parts between said drawing member and said pair of runners.

7. The shade device according to claim 1, wherein said plurality of shade support parts are in line with each other along the width direction of said shade.

8. The shade device according to claim 1, further comprising a drive mechanism causing said pair of runners to respectively move between the proximal ends and the distal ends of said pair of rails.
